# EUROPEAN PATENT APPLICATION

(11) **EP 4 312 347 A1**
(43) Date of publication of application: **31.01.2024**
(21) Application number: 22187348.2
(22) Date of filing: 27.07.2022
(51) Int. Cl.: H02J 50/00, H02J 50/10, H02J 50/90

(54) **MAGNETIC TRACTION MOVEABLE WIRELESS POWER SUPPLY SYSTEM**

(71) Applicant: Smart Electric Works Co.,Ltd., Hsi Hu Chen, Chang Hua Hsien (TW)
(72) Inventor: YANG, Jerry, West Dist., Taichung (TW)
(74) Representative: 2K Patentanwälte Blasberg Kewitz & Reichel

(57) **Abstract**

A magnetic traction moveable wireless power supply system of the present invention is provided with a wireless power supply device (20) and a wireless power consumption device (30) on both sides of a partition (10). The wireless power supply device (20) and the wireless power consumption device (30) are each provided with a magnet (32), which can be mutually sucked and aligned under partition (10) separation, and can be moved synchronously to continuously supply power, so that the wireless power consumption device (30) can obtain power at any position in the partition (10). In addition, the power cord (26) of the wireless power supply device (20) is connected in series with a magnetic control switch (25). When the wireless power consumption device (30) is extracted from the partition (10), the magnetic control switch (25) can disconnect the power circuit, save unnecessary power consumption during non-power supply, and stop the interference of the invalid magnetic line signal to the surrounding.

## Description

### BACKGROUND OF THE INVENTION

### (a) Field of the Invention

The present invention relates to the technical field of wireless power supply, in particular to a magnetic traction movable wireless power supply system, which can obtain electricity when the lighting fixtures or wireless electrical devices such as charging sockets are moved to any position on the partition.

### (b) Description of the Prior Art

Many electrical devices today are still wired to the power source, or pre-wired to the power source and installed in a fixed location. For example, install the lighting device on the wall or ceiling, or fix the network camera in the corner, or insert the plug of the night light into the wall socket, etc. The above-mentioned conventional wired electrical devices are basically fixed in a specific position and cannot be moved at will, or only limited extension through the power connection wire, but cannot get rid of the existence and restraint of the wires in space and vision.

The wireless charging and power supply standards such as Qi, A4WP, and PMA developed in modern times use magnetic induction, magnetic resonance or other radio frequency microwave technologies to transmit power wirelessly from coils or antennas of the power transmitting circuit and the receiving circuit. There is no need to use wires to connect between the two, so the electrical device can use the power without using conductive contacts or wires to connect the power supply, and can obtain electricity as long as the electrical device is close to the power supply device. For example, the wireless charging device of a mobile phone, the user only needs to gently place the mobile phone on the wireless charging device, and it can be charged without connecting the charging cable. It is more convenient than the conventional wired charging method. Even so, the power transmission end still needs to be connected to the power supply in a wired manner. In use, it is still bound by the power cord, and it has not completely gotten rid of the existence and shackles of the power cord in space and vision.

### SUMMARY OF THE INVENTION

As mentioned above in the prior art, conventional wired power supply systems and wireless charging devices are still limited by the power cord in space and vision, or can only be used in a fixed position. The present invention aims to break through the limitation and achieve a wireless power supply system that is free from the fetters of the power cord and can move freely from the space and vision of the power consumption end.

The present invention mainly includes a partition, a wireless power supply device with a built-in magnet, and a wireless power consumption device with a built-in magnet. It is characterized by applying the principle of magnetic attraction combined with wireless power supply technology such as Qi, A4WP, PMA or other wireless charging standards and power supply standards, to create a magnetic traction moveable wireless power supply system that can be applied to wallboards, ceilings, desktops or whiteboards and other fields. This partition is installed in each application field as the panel of this installed body, and the wireless power supply device and the wireless power consumption device are respectively set on the inner and outer sides of the partition. Utilize the magnets that are placed in the wireless power supply device and the wireless power consumption device to attract and align each other under the partition separation, so that a better magnetic field coupling effect is achieved between the transmitter coil of the wireless power supply device and the receiver coil of the wireless power consumption device, so that the wireless power consumption device can obtain higher power receiving efficiency. At the same time, the wireless power supply device can be moved synchronously and continuously powered by the magnetic force of both magnets when the wireless power consumption device is moved by the user. In this way, electrical devices such as sockets or lamps can be moved wirelessly in space, and placed in any part of the partition such as the wall, ceiling, desktop or cabinet to obtain electricity, and the electrical devices are visually and completely free from the fetters of wires. In addition, a magnetic control switch can be connected in series with the power cord of the wireless power supply device. When the wireless power consumption device approaches to the wireless power supply, it starts to close the circuit to supply power due to the excitation of its magnet or the suction of the mechanical contact. When the wireless power consumption device is extracted from the partition, the power supply circuit of the wireless power supply device is disconnected to save unnecessary power loss during non-power supply and stop the interference of the invalid magnetic line signal to the surrounding.

In addition to the above common features of the present invention, in order to respond to the use in different fields, there are three modes of wireless power supply device setting methods, namely "soft tether mode", "ferromagnetic element array attraction mode" and "natural fall mode", etc. The three methods are described as follows.

### [magnetic traction moveable wireless power supply system using soft tether mode]

The magnetic traction moveable wireless power supply system using soft tether mode of the present invention is mainly applied in the field where the partition is placed vertically, and its main feature is that a soft tether is tied above the inner surface of the partition, and the other end of the soft tether is tied to the body of the wireless power supply device. The function of the soft tether is that when the wireless power consumption device is extracted from the partition so that the wireless power supply device loses suction and falls, it is suspended by the soft tether to ensure that the wireless power supply device will fall on the lower edge of the partition. In addition, a ferromagnetic material element can also be embedded in the position of the lower edge of the partition, so that the wireless power supply device can be suspended on the lower edge of the partition by the soft tether, and its built-in magnet can attract the ferromagnetic material element, so that the power supply device can still maintain a state close to the inside of the partition. The position can be marked so that the user can quickly and accurately couple with the wireless power supply device every time the wireless power consumption device needs to be repositioned. When the user moves the wireless power consumption device on the surface of the partition, because the magnetic attraction force between the built-in magnets of the wireless power consumption device and the wireless power supply device is far greater than the suction force between the built-in magnet of the wireless power supply device and the ferromagnetic material element embedded in the partition, so the wireless power supply device can be pulled by the magnetic force of the wireless power consumption device, and then move to its desired position synchronously and continue to supply power.

### [magnetic traction moveable wireless power supply system using ferromagnetic element array attraction mode]

The magnetic traction moveable wireless power supply system using ferromagnetic element array attraction mode can be applied to the field where the partition is placed at various angles. Ferromagnetic material elements are densely embedded inside the partition in a scattered and unconnected manner. When the wireless power consumption device is extracted and leaves the partition, the wireless power supply device can still attract the ferromagnetic material element of the partition of its position by its magnet, and then stops on the partition. When the user needs to re-place the wireless power consumption device, it is possible to use the wireless power consumption device to move and scanning method close to the wireless power supply device, that is, while it is attracted and aligned with each other and apply a indicator light to observe whether it is received power, to detect and find the position corresponding to the coupling of the wireless power supply device. When the user moves the wireless power consumption device on the partition surface, because the attraction force between the built-in magnets of the wireless power consumption device and the wireless power supply device is far greater than the attraction force between the built-in magnet of the wireless power supply device and the ferromagnetic material element embedded in the partition, the wireless power supply device can still be smoothly pulled by the magnetic force of the wireless power consumption device and move synchronously to the user's desired position and continue to supply power.

### [magnetic traction moveable wireless power supply system using natural fall mode]

The magnetic traction moveable wireless power supply system using natural fall mode is mainly applied to the field where the partition is placed horizontally. Its main feature is that there is no soft tether for suspending the wireless power supply device inside the partition, and there is no other embedded ferromagnetic material element for attraction, but only the internal height of the partition is slightly higher than the thickness of the wireless power supply device and there is space for it to move freely. When the wireless power consumption device is extracted and leaves the partition, the wireless power supply device falls on the bottom of the partition inside lightly. When the user needs to re-place the wireless power consumption device, the user also uses the scanning method to move the wireless power consumption device close to the wireless power supply device to pick it up and align it with each other, and apply a indicator light to observe whether it is received power, thereby detecting and finding the coupling position corresponding to the wireless power supply device. When the user continues to move the wireless power consumption device on the surface of the partition to its desired position, the wireless power supply device is moved synchronously by the magnetic force of the wireless power consumption device and continues to supply power.

### BRIEF DESCRIPTION OF THE DRAWINGS

FIG. 1 is a schematic structural diagram of the first embodiment of the present invention.
FIG. 2 is a schematic diagram of the operations of the first embodiment of the present invention.
FIG. 3 is a functional block diagram of the wireless power supply circuit.
FIG. 4 is a schematic of cross-sectional view of the first embodiment of the present invention.
FIG. 5 is a block diagram of each module of first embodiment of the present invention.
FIG. 6 is a block diagram of the wireless power supply device add a magnetic control switch of the first embodiment of the present invention.
FIG. 7 is a schematic structural diagram of first embodiment embed a ferromagnetic material element of the present invention.
FIG. 8 is a schematic diagram of the operation of the first embodiment embed a ferromagnetic material element of the present invention.
FIG. 9 is a schematic structural diagram of the second embodiment of the present invention.
FIG. 10 is a schematic diagram of the structure and operation in the third embodiment of the present invention.
FIG. 11 is a schematic diagram of the structure of a larger-scale magnetic traction moveable wireless power supply system formed by combining unit partitions.

### DETAILED DESCRIPTION OF THE PREFERRED EMBODIMENTS

Three specific embodiments are listed with the accompanying drawings, and the structural features and embodiments of the present invention are described as follows:

### Embodiment 1: Magnetic traction moveable wireless power supply system by tether.

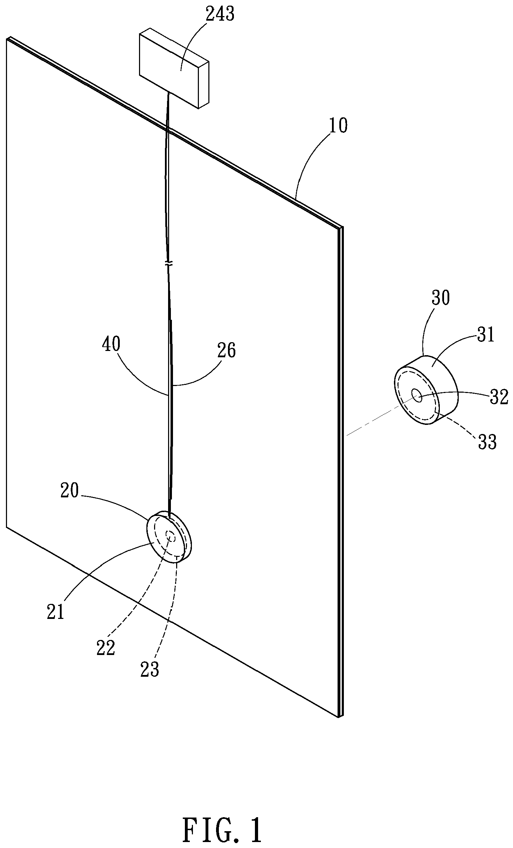

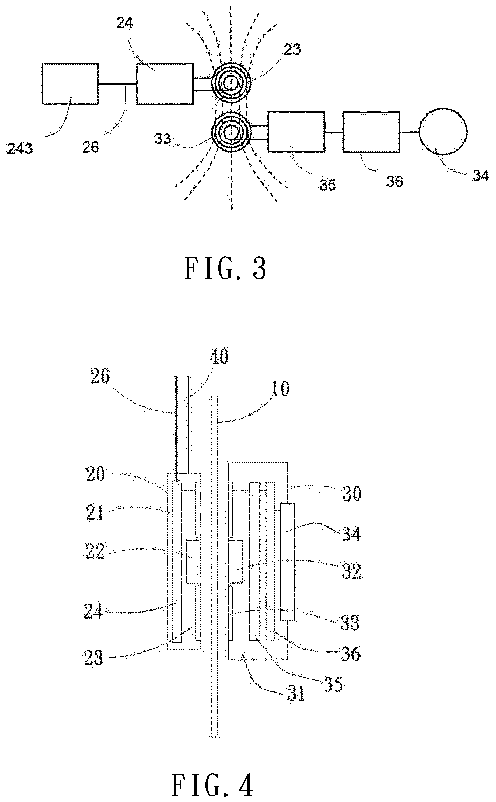

Please refer to FIG. 1, which is a structure diagram of the specific embodiment of the magnetic traction moveable wireless power supply system by tether of the present invention, which comprises a partition 10, a power supply unit 243, a wireless power supply device 20 and a wireless power consumption device 30. The wireless power supply device 20 is arranged on the first side of the partition 10, and its first body 21 is suspended at the lower edge of the partition 10 by a soft tether 40 and a power cord 26. The wireless power consumption device 30 will be used on the opposing second side of the partition 10. The wireless power supply circuit used by the wireless power supply device and the wireless power consumption device can be circuits that conform to the Qi standard, the A4WP standard, the PMA standard or other wireless charging and power supply technologies. Although these wireless charging and power supply circuits may have different technology principles, but they are generally composed of a power transmitter circuit and a power receiver circuit, and the two sides transmit power wirelessly through coils or antennas. The functional block is shown in FIG.3, wherein the power transmission end circuit is composed of the power supply unit 243, a power transmission control circuit 24 and a transmitter coil 23. The power receiving end circuit is composed of a receiver coil 33, a power receiving control circuit 35, a load 34 and a load driving circuit 36 required for driving different loads. The power transmission end and the power receiving end transmit power according to the applied wireless charging, power supply protocol and technology, and the receiving end circuit outputs the obtained power through the load driving circuit to drive the load to work.

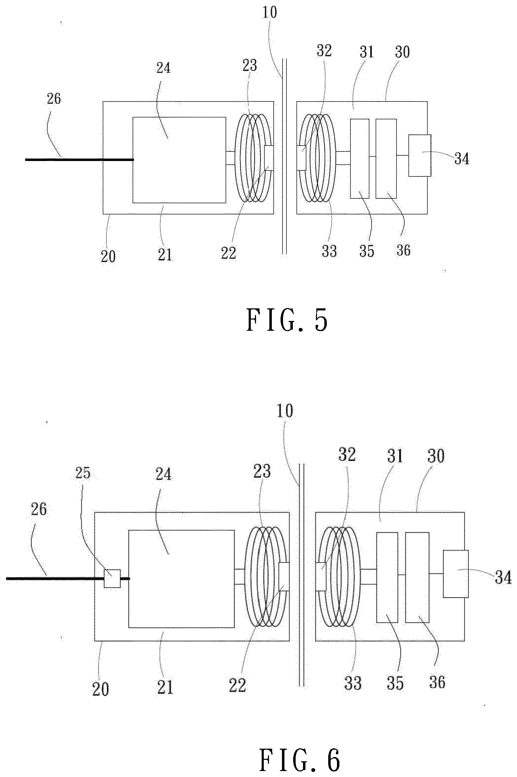

The present invention applies the aforementioned wireless power supply circuit technology plus the ingenuity of the magnetic traction structure, as shown in FIG.4 and FIG.5. The wireless power supply device 20 of this embodiment is mainly composed of the first body 21, the power transmission control circuit 24, a first magnet 22 and the transmitter coil 23. The first body 21 can be implemented as a casing, and the first magnet 22 is a permanent magnet disposed on the first body 21. The wireless power consumption device 30 mainly comprises a second body 31, a second magnet 32, the receiver coil 33, the power receiving control circuit 35, the load driving circuit 36 and a load 34. The second body 31 is a casing of the electrical device, and the second magnet 32 is a permanent magnet arranged on the second body 3 1.

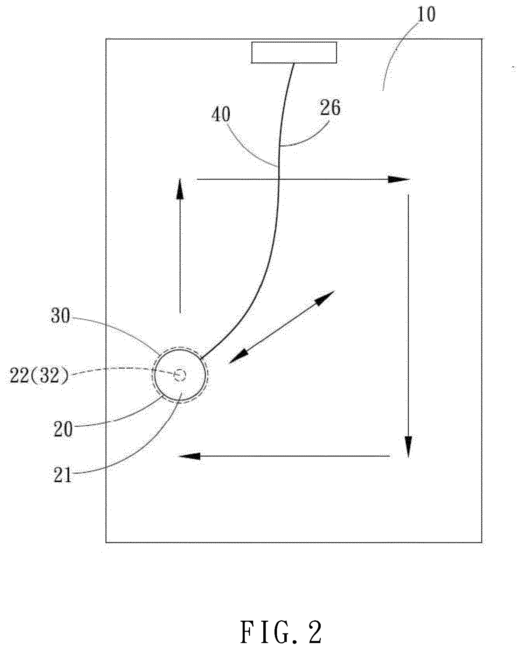

As shown in FIG.2, when the user wants to activate the wireless power consumption device 30, it can be placed on the second side of the partition 10, so that the second magnet 32 is attracted to the first magnet 22 of the above-mentioned wireless power supply device 20 through its magnetism. In this way, the transmitter coil 23 of the wireless power supply device 20 is aligned with the receiver coil 33 of the wireless power consumption device 30, and the two devices are attracted and parked on both sides of the partition 10 respectively, and the wireless power consumption device 30 and the wireless power supply device 20 transmit power according to the applied wireless charging, power supply agreement and technology. The wireless power consumption device 30 receives the electric energy transmitted by the wireless power supply device 20 through the receiver coil 33 and the power receiving control circuit 35, and outputs through the load driving circuit 36 to drive the load 34 to act. The load 34 can be a lighting fixture or a charging circuit, etc. Or, the wireless power consumption device 30 only provides the received power, and the user provides a load and driving circuit with a compatible interface. In addition, when the user moves the wireless power consumption device 30 to its desired position on the surface of the partition 10, the wireless power supply device 20 on the other side of the partition 10 can also be moved together by magnetic traction at the same time (as shown in FIG. 2), and continue to provide the function of wireless power supply. Therefore, the wireless power consumption device 30 can be placed and used at any position in the partition 10, so as from the view of the power consumption end, it has achieved the wireless power supply function that free from the fetters of the power cord and can be move freely as well.

The embodiment of the magnetic traction moveable wireless power supply system in the tether mode shown in FIG. 1 and FIG. 2, it is mainly applied to the partition 10 of a wall panel, cabinet, etc., which is vertically placed field. The first body 21 of the wireless power supply device 20 is suspended below the partition 10 by a soft tether 40 with an appropriate length. The function of the soft tether 40 is that when the wireless power consumption device 30 is suddenly extracted from the partition 10, so that when the wireless power supply device 20 loses its attraction force and falls down, it can still be ensured that the wireless power supply device 20 falls on the origin of the lower edge of the partition due to being suspended by the soft tether 40. It enables the user to quickly and accurately couple with the wireless power supply device from the origin every time the wireless power consumption device needs to be repositioned.

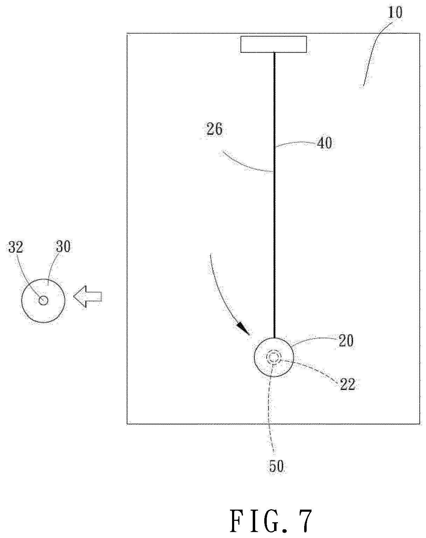

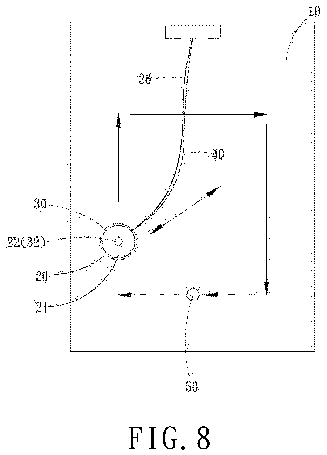

Please refer to FIG. 7, the magnetic traction moveable wireless power supply system in the tether mode of the present invention can embed a ferromagnetic material element 50 at the lower edge position of the partition 10. The ferromagnetic material element 50 is a material that can be attracted by magnets. When the wireless power consumption device 30 is extracted and leaves the partition 10, and the wireless power supply device 20 is caused to fall due to the loss of the attraction force, the wireless power supply device 20 is suspended on the lower edge of the partition 10 by the soft tether 40, and its built-in first magnet 22 attracts the ferromagnetic material element 50 at this position, so that the first body 21 of the wireless power supply device 20 can still be kept close to the partition 10. The surface of the partition 10 could be marked the position, so that the user can quickly and accurately couple with the wireless power supply device 20 when each time the wireless power consumption device 30 needs to be repositioned. When the user moves the wireless power consumption device 30 on the partition surface (as shown in FIG. 8), because the suction force of the first magnet 22 built in the wireless power supply device 20 and the second magnet 32 built in the wireless power consumption device 30 is far greater than the suction force of the first magnet 22 of the wireless power supply device 20 and the ferromagnetic material element 50 in the partition 10, the wireless power supply device 20 can be smoothly pulled by the magnetic force of the wireless power consumption device 30, and then synchronously moves to its desired position and continues to supply power.

Please refer to FIG.6, the power cord 26 of the wireless power supply device 20 can be connected in series with a magnetic control switch 25. When the magnetic control switch 25 during the wireless power consumption device 30 near by, a mechanical contact of the magnetic control switch 25 is excited by the magnet and the power supply circuit of the wireless power supply device is connected to provide the power supply. When the wireless power consumption device is extracted from the partition, the power supply circuit of the wireless power supply device is disconnected to save unnecessary power consumption during non-power supply periods, and to stop the interference of the invalid magnetic line signal to the surrounding.

### Embodiment 2: the magnetic traction moveable wireless power supply system using ferromagnetic element array attraction mode.

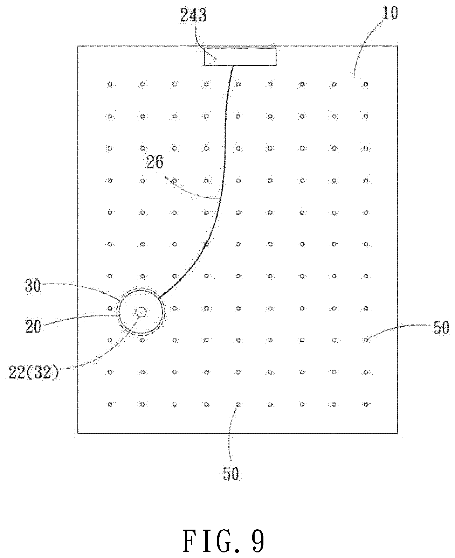

Please refer to FIG. 9, which is a specific embodiment of the magnetic traction moveable wireless power supply system using the ferromagnetic element array attraction mode of the present invention, which can be applied to the field where the partition 10 is placed at any angle. There are two main differences between it and the magnetic traction moveable wireless power supply system in the tether mode of the first embodiment: One is that the present embodiment does not need the soft tether 40 of the first embodiment. The second is that the partition 10 of this implementation method is densely embedded with scattered and unconnected ferromagnetic material elements 50, and the rest are similar to the implementation method of the magnetic traction moveable wireless power supply system in the tether mode of the first embodiment. In this embodiment, the main function of the ferromagnetic material elements 50 densely embedded on the partition 10 is that when the wireless power consumption device 30 is extracted and left from the partition 10, the wireless power supply device 20 can still use its own built-in first magnet 22 to attract the ferromagnetic material elements 50 embedded in the partition 10 at its location and stay on the partition 10 and can ensure the best quality of fit.

In this way, when the user needs to relocate the wireless power consumption device, the wireless power consumption device 30 can be utilized to move and scanning method to approach the wireless power supply device 20, and let the two are sucked and aligned with each other, That is, it can detect and find the position corresponding to the coupling of the wireless power supply device 20 by using the characteristic of turn on the indicator light when the power is received. When the user moves the wireless power consumption device 30 on the partition surface, because the suction force of the first magnet 22of the wireless power supply device 20 and the second magnet 32 built in the wireless power consumption device 30 is far greater than the suction force between the ferromagnetic material elements 50 embedded in the partition 10 and the first magnet 22 built in the wireless power supply device 20, the wireless power supply device 20 can still be smoothly pulled by the magnetic force of the wireless power consumption device 30, and then move synchronously to the desired position of the user and continue to supply power.

### Embodiment 3: the magnetic traction moveable wireless power supply system of the natural hanging mode.

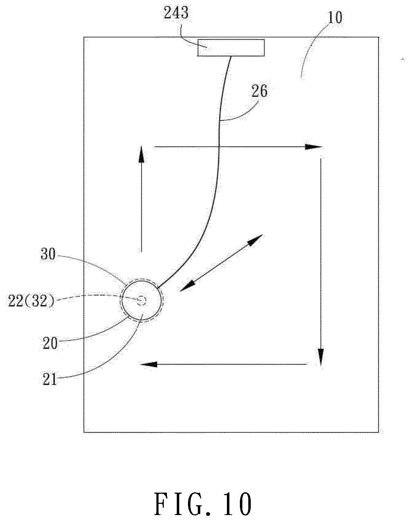

Please refer to Fig.10, which is a specific embodiment of the magnetic traction moveable wireless power supply system using the natural fall mode of the present invention, which has two main differences with the above-mentioned first and second embodiments: One is that this embodiment does not require the above-mentioned soft tether 40. The second is that there is no need to embed any above-mentioned ferromagnetic material element 50 in the partition 10, and the rest are similar to the first and second embodiments.

This embodiment is mainly applied to fields such as desktops and ceilings where the partition 10 is placed horizontally. The internal height of the partition 10 is only slightly higher than the thickness of the wireless power supply device 20 and there is space for it to move freely. When the wireless power consumption device 30 is extracted and leaves the partition 10, the wireless power supply device 20 falls on the bottom of the partition 10 lightly. When the user needs to re-place the wireless power consumption device 30, the user also uses the scanning method to move the wireless power consumption device 30 close to the wireless power supply device 20 to pick it up and align it with each other, and using the characteristics of turn on the indicator light when received power, thereby detecting and finding the coupling position corresponding to the wireless power supply device 20. When the user continues to move the wireless power consumption device 30 on the surface of the partition 10 to its desired position, the wireless power supply device 20 is moved synchronously by the magnetic force of the wireless power consumption device 30 and continues to supply power.

The above is the description of the three implementations of the magnetic traction moveable wireless power supply system, such as "tether mode", " ferromagnetic element array attraction mode" and " natural fall mode ". In order to simplify the picture for the convenience of description, only the panel diagram of the partition 10 is drawn. In practical application, partition 10 can add necessary surrounding frames to the board body, so that it can be installed on the surface of the installed body such as walls, ceilings, cabinets or tables, so as to form an accommodating and movable space for the wireless power supply device 20 between the partition 10 and the mounted body.

The above-mentioned each unit partition 10 can be implemented as an independent and complete box itself, and the space in the box provides the wireless power supply device 20 that can be accommodated and moved. After the partition 10 is embedded or installed on the wall, ceiling, cabinet or table, etc., the panel of the partition 10 becomes the panel of the installed body. The wireless power supply device 20 is hidden inside the panel, and the wireless power consumption device 30 is placed outside the panel, and the panel is the partition between the wireless power supply device 20 and the wireless power consumption device 30. The installed body can install one or more unit partitions 10 as needed, and install a wireless power supply device 20 inside each unit partition 10, the wireless power consumption device 30 and its load 34 can move freely between single or multi-unit partitions 10 and obtain the required power wirelessly.

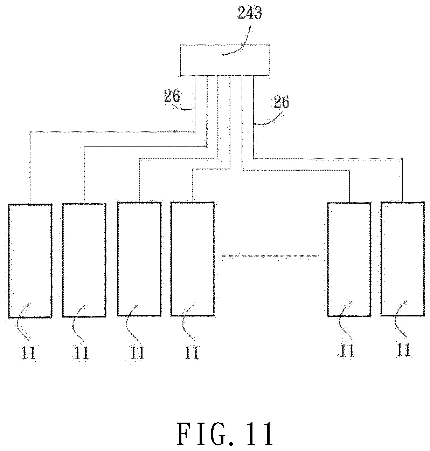

In addition, the power supply unit 243 required on the wireless power supply device 20 side is not only shown in FIG.1, FIG.9 and FIG.10, etc., each partition 10 supports a distributed configuration of a power supply unit 243, alternatively, as in the centralized configuration method of FIG.11, one power supply unit 243 supplies several unit wireless power supply partitions 11. Each unit wireless power supply partition 11 is a full-featured wireless power supplying end facility composed of the partition 10, wireless power supply device 20 and power cord 26 of the magnetic traction moveable wireless power supply system either using tether mode, ferromagnetic element array attraction mode or natural fall mode.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A magnetic traction moveable wireless power supply system, comprising:
a partition (10) being a plate body or a plate body formed by a panel of a box body, and said plate body being a plate with smooth opposing first and second sides;
a wireless power supply device (20) comprising a first magnet (22), a transmitter coil (23), a power supply circuit and a power transmission control circuit (24), said wireless power supply device (20) being hidden and arranged on the first side of said partition (10);
a wireless power consumption device (30) comprising a second magnet (32), a receiver coil (33), a power receiving control circuit (35), a load driving circuit (36) and a load (34), said wireless power consumption device (30) being attached to the second side of said partition (10) when in use; and
wherein said first magnet (22) of said wireless power supply device (20) and said second magnet (32) of said wireless power consumption device (30) are respectively attracted on the first and second sides of said partition (10) through magnetic attraction, so that said transmitter coil (23) of said wireless power supply device (20) and said receiver coil (33) of said wireless power consumption device (30) align with each other, so that said wireless power consumption device (30) wirelessly receives the electric energy that said wireless power supply device (20) transmits, and controls said load (34) to work through said load driving circuit (36) action; when said wireless power consumption device (30) is moved by the user, said wireless power supply device (20) is moved synchronously by the magnetic traction of said first magnet (22) and said second magnet (32) and continues to supply power.

2. The magnetic traction moveable wireless power supply system as claimed in claim 1, wherein said power supply circuit of said wireless power supply device (20) is connected in series with a magnetic control switch (25); when said wireless power consumption device (30) is close to said magnetic control switch (25), the excitation or suction of said second magnet (32) triggers the contact of said magnetic control switch (25) to close to supply power; when said wireless power consumption device (30) is extracted to leave said partition (10), said magnetic control switch (25) disconnects said power supply circuit of said wireless power supply device (20).

3. The magnetic traction moveable wireless power supply system as claimed in claim 1, wherein said wireless power supply device (20) comprises a first body (21) and a soft tether (40); said first magnet (22), said power transmission control circuit (24) and said transmitter coil (23) are arranged in said first body (21) of said wireless power supply device (20); said soft tether (40) has one end thereof connected to said first body (21), and an opposite end thereof connected to said partition (10) or other objects.

4. The magnetic traction moveable wireless power supply system as claimed in claim 1, wherein said partition (10) embeds a ferromagnetic material element (50).

5. The magnetic traction moveable wireless power supply system as claimed in claim 1, wherein said partition (10) embeds a number of dense but discrete unconnected ferromagnetic material elements (50).

6. The magnetic traction moveable wireless power supply system as claimed in claim 1, wherein said partition (10) has configured therein a power supply unit (243) to supply the power required by said wireless power supply device (20).

7. The magnetic traction moveable wireless power supply system as claimed in claim 1, wherein said wireless power supply device (20) receives the power output from a power supply unit (243) outside said partition (10) through a power cord (26).

8. The magnetic traction moveable wireless power supply system as claimed in claim 3, 4 or 5, wherein said partition (10) and said wireless power supply device (20) form a unit wireless power supply partition (11), and multiple unit wireless power supply partitions (11) are combined to form a larger wireless power supply partition (11), and said wireless power consumption device (30) can be used and moved in one unit wireless power supply partition (11) or between a plurality of unit wireless power supply partitions (11).

9. The magnetic traction moveable wireless power supply system as claimed in claim 8, wherein said unit wireless power supply partition (11) is equipped with a power supply unit (243), which supplies the power required by said unit wireless power supply partition (11).

10. The magnetic traction moveable wireless power supply system as claimed in claim 8, wherein said unit wireless power supply partition (11) receives the power output from a power supply unit (243) outside said unit wireless power supply partition (11) through a power cord (26).
